# EUROPÄISCHE PATENTSCHRIFT

(11) **EP 2 726 428 B1**
(45) Veröffentlichungstag und Bekanntmachung des Hinweises auf die Patenterteilung: **14.12.2022**
(21) Anmeldenummer: 12741384.7
(22) Anmeldetag: 20.06.2012
(51) Int. Cl.: F24C 15/10, C03C 17/34

(54) **HAUSGERÄT**
DOMESTIC APPLIANCE
APPAREIL MÉNAGER

(30) Priorität: 29.06.2011 ES 201131089 U
(43) Veröffentlichungstag der Anmeldung: 07.05.2014
(73) Patentinhaber: BSH Hausgeräte GmbH, 81739 München (DE)
(72) Erfinder: ALAMAN AGUILAR, Jorge, 50008 Zaragoza (ES); ALONSO ESTEBAN, Rafael, 22004 Huesca (ES); BUÑUEL MAGDALENA, Miguel Angel, 50017 Zaragoza (ES); CARRETERO CHAMARRO, Enrique, 50003 Zaragoza (ES); ESTER SOLA, Francisco Javier, 50001 Zaragoza (ES); PELAYO ZUECO, Francisco Javier, 50008 Zaragoza (ES); PEREZ CABEZA, Pilar, 50008 Zaragoza (ES); PLANAS LAYUNTA, Fernando, 50009 Zaragoza (ES); SUBIAS DOMINGO, Jesus Mario, 50008 Zaragoza (ES); VILLUENDAS YUSTE, Francisco, 50009 Zaragoza (ES)
(86) Internationale Anmeldenummer: PCT/IB2012/053099
(87) Internationale Veröffentlichungsnummer: WO 2013/001414

(56) Entgegenhaltungen:
- EP-A1- 2 243 752
- WO-A1-90/11671
- WO-A1-2011/020718
- DE-C1- 10 112 234
- DE-T2- 69 100 010
- JP-A- 2010 159 171
- US-A1- 2008 190 409

## Beschreibung

Die Erfindung geht aus von einem Hausgerät mit einer Hausgerätevorrichtung nach Anspruch 1.

Es sind Kochfeldplatten bekannt, die eine als Vielschichtstruktur ausgebildete Beschichtung aufweisen, die dazu vorgesehen ist, eine metallische Färbung zu erzeugen, wobei sich in der Vielschichtstruktur metallische und isolierende Schichten abwechseln.

Beispielsweise ist aus der Druckschrift DE 101 12 234 C1 bereits eine Hausgerätevorrichtung mit einer Glaseinheit und einer als Vielschichtstruktur ausgebildeten Isolierschicht mit drei Einzelschichten bekannt, welche an einer Unterseite der Glaseinheit angeordnet ist. Ferner ist an der Unterseite der Isolierschicht eine Heizleiterschicht der Hausgerätevorrichtung angeordnet.

Außerdem ist aus der Druckschrift WO 2011/020718 A1 ebenfalls eine an einer Unterseite einer Glaseinheit einer Hausgerätevorrichtung angeordnete Beschichtung der Hausgerätevorrichtung bekannt, wobei die Beschichtung zumindest zwei metallische Schichten und eine zwischen den metallischen Schichten angeordnete dielektrische Schicht aus einem isolierenden Material aufweist.

Die Druckschrift DE 691 00 010 T2 offenbart ferner eine Hausgerätevorrichtung mit einer Platte aus Glaskeramik, welche auf einer Unterseite mit einer Schicht aus einem Epoxyharz beschichtet ist, und gegen welche eine in einer Isolierschicht aus einem Silikonharz eingebettete Schaltung der Hausgerätevorrichtung angedrückt ist.

Zudem ist aus der Druckschrift US 2008/190409 A1 eine Hausgerätevorrichtung mit einer als Kochfeldplatte ausgebildeten Glaseinheit bekannt, wobei die Glaseinheit eine Beschichtung mit zumindest zwei maskierten Zonen aufweist, welche zu beheizende Bereiche für eine Beheizung zumindest eines Gargeschirrs einem Bediener kennzeichnen. Hierbei weist die Beschichtung zumindest eine Schicht aus einem metallischen Material auf.

Darüber hinaus ist aus der Druckschrift EP 2 243 752 A1 eine kratzfeste Silikonbeschichtung für Kochflächen aus Glas oder Glaskeramik bekannt, welche eine erste Schicht zumindest bestehend aus vernetztem Polysiloxan und Pigmenten sowie eine zweite Schicht aus unvernetztem Polysiloxan aufweist.

Die Aufgabe der Erfindung besteht insbesondere darin, eine gattungsgemäße Vorrichtung mit besonders vorteilhaft geringen Anteilen elektrisch leitfähigen Materials bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einem Hausgerät mit einer Hausgerätevorrichtung, insbesondere einer Kochfeldvorrichtung, mit zumindest einer Glaseinheit und zumindest einer als Vielschichtstruktur ausgebildeten Beschichtung, die in zumindest einem Teilbereich auf zumindest einer Seite, insbesondere einer Rückseite, der Glaseinheit angeordnet ist, wobei die Beschichtung zumindest zwei, insbesondere zumindest drei, vorteilhaft zumindest vier, vorzugsweise zumindest fünf, aufeinanderfolgende Schichten aus zumindest einem isolierenden Material aufweist. Unter einer "Glaseinheit" soll insbesondere eine Einheit verstanden werden, die zu einem Großteil, insbesondere zu mindestens 50 %, vorteilhaft zu mindestens 70 %, vorzugsweise zu mindestens 90 %, von einem glasartigen Material gebildet ist. Unter einem "glasartigen" Material soll insbesondere ein zumindest teilweise amorphes, insbesondere transparentes, vorzugsweise anorganisches, Material verstanden werden. Insbesondere ist das glasartige Material von einer Glaskeramik und/oder Borosilikatglas gebildet. Insbesondere ist die Glaseinheit als Platteneinheit ausgebildet. Vorzugsweise weist das glasartige Material einen betragsmäßig niedrigen linearen Wärmeausdehnungskoeffizienten, insbesondere kleiner als 1.10⁻⁶ m/(m·K), vorteilhaft kleiner als 0,5·10⁻⁶ m/(m·K), vorzugsweise kleiner als 0,1·10⁻⁶ m/(m·K), auf. Unter einer "Platteneinheit" soll insbesondere eine Einheit verstanden werden, die eine Dicke aufweist, die maximal 50 %, insbesondere maximal 20 %, vorteilhaft maximal 10 %, vorzugsweise maximal 5 %, einer Länge und/oder einer Breite der Einheit entspricht. Vorzugsweise weist die Platteneinheit zumindest eine, vorzugsweise zumindest zwei, insbesondere einander gegenüberliegende, Seiten auf, die eine ebene, insbesondere glatte, Oberfläche aufweisen. Insbesondere ist die Glaseinheit als Kochfeldplatte ausgebildet. Unter einer "Vielschichtstruktur" soll insbesondere eine Folge von zumindest zwei, insbesondere zumindest drei, vorteilhaft zumindest vier, vorzugsweise zumindest fünf, Schichten verstanden werden. Insbesondere ist dabei eine Dicke einer dünnsten Schicht der Vielschichtstruktur größer als 0,5 %, insbesondere größer als 1 %, vorteilhaft größer als 2 %, besonders vorteilhaft größer 5 %, vorzugsweise größer als 10 %, einer Dicke einer dicksten Schicht der Vielschichtstruktur. Insbesondere weist jede Schicht der Vielschichtstruktur eine Dicke auf, die kleiner ist als 2 µm, insbesondere kleiner ist als 1,5 µm, vorzugsweise kleiner ist als 1 µm, und insbesondere größer ist als 1 nm, vorteilhaft größer ist als 2 nm, vorzugsweise größer ist als 4 nm. Insbesondere weist die Vielschichtstruktur eine Dicke auf, die kleiner ist als 2 µm, insbesondere kleiner ist als 1,5 µm, vorzugsweise kleiner ist als 1 µm, und insbesondere größer ist als 3 nm, vorteilhaft größer ist als 6 nm, vorzugsweise größer ist als 9 nm. Vorzugsweise liegt eine erste Schicht der Vielschichtstruktur direkt an der Glaseinheit an. Unter einem "Teilbereich" soll zumindest eine, insbesondere genau eine, zusammenhängende Fläche verstanden werden, die durch zumindest eine, insbesondere genau eine, geschlossene Linie beschränkt ist. Unter der "Rückseite" der Glaseinheit soll insbesondere eine Seite der Glaseinheit verstanden werden, die sich von einer Seite der Glaseinheit unterscheidet, die einem Bediener der Hausgerätevorrichtung direkt zugänglich ist. Insbesondere kann es sich dabei um eine Unterseite einer Kochfeldplatte handeln. Unter zwei "aufeinander folgenden" Schichten sollen insbesondere zwei Schichten verstanden werden, die unmittelbar direkt aneinandergrenzen. Unter einem "isolierenden Material" soll ein dielektrisches Material verstanden werden. Insbesondere weist ein isolierendes Material eine Leitfähigkeit von weniger als 10⁻⁶ S/cm, insbesondere weniger als 10⁻⁸S/cm, vorzugsweise weniger als 10⁻¹⁰S/cm, auf. Insbesondere ist das isolierende Material von Oxiden, Nitriden und/oder Oxinitriden von Metallen, insbesondere Übergangsmetallen, vorteilhaft Edelstahl, Molybdän, Nickel, Chrom, Niob, Vanadium, Titan, Tantal, Wolfram, Zinn, Zink und/oder Aluminium und/oder Halbleitern, insbesondere Silizium, gebildet. Insbesondere liegen diese isolierenden Materialien in Mischformen vor. Es kann insbesondere erreicht werden, dass die Beschichtung eine geringe Menge elektrisch leitfähigen, insbesondere metallischen, Materials aufweist, was insbesondere zu einer hohen Wärmeresistenz führen kann.

Weiterhin wird vorgeschlagen, dass alle Schichten der Beschichtung aus zumindest einem isolierenden Material gebildet sind. Es kann insbesondere ein störender Einfluss metallischer Schichten vermieden werden.

In einer weiteren Ausführung der Erfindung ist zumindest ein Teil der Beschichtung mit einem PVD-Verfahren aufgebracht. Unter einem "PVD-Verfahren", einem Verfahren zur physikalischen Gasphasenabscheidung, soll insbesondere ein Verfahren verstanden werden, bei dem ein Ausgangsmaterial in eine Gasphase übergeleitet wird und sich dann auf einem Trägermaterial ablagert. Es handelt sich hierbei um ein vorzugsweise festes Material, das durch beispielsweise ein Erhitzen verdampft wird. Vorteilhaft handelt es sich bei dem PVD-Verfahren um ein Magnetron-Sputter-Verfahren. Beim Magnetron-Sputtern wird ein Plasma erzeugt, dessen beschleunigte Teilchen einzelne Atome und/oder Atomverbünde, so genannte Cluster, aus dem Ausgangsmaterial herausschlagen. Diese herausgeschlagenen Atome und/oder Cluster können sich dann am Trägermaterial ablagern. Durch die Verwendung eines PVD-Verfahrens kann insbesondere ein flexibler und einfacher Herstellungsprozess gewährleistet werden. Insbesondere ergibt sich eine hohe Flexibilität hinsichtlich einer Dicke und eines Materials der Beschichtung. Zumindest eine, insbesondere zumindest zwei, vorteilhaft zumindest drei, der Schichten der Beschichtung ist als absorbierende Schicht ausgebildet. Insbesondere weist die Beschichtung maximal fünf, vorteilhaft maximal vier, vorzugsweise maximal drei, absorbierende Schichten auf. Unter einer "absorbierenden" Schicht soll eine Schicht verstanden werden, deren Material für Licht, in zumindest einem Wellenlängenbereich mit einer Breite von zumindest 50 nm, insbesondere zumindest 100 nm, vorteilhaft zumindest 200 nm, vorzugsweise zumindest 400 nm, der zumindest dem Wellenlängenbereich des sichtbaren Lichts zwischen 380 nm und 780 nm entspricht, einen Absorptionskoeffizienten aufweist, der größer als 1/µm, insbesondere größer als 1,5/µm, vorteilhaft größer als 2/µm, vorzugsweise größer als 2,2/µm ist. Insbesondere absorbiert eine Schicht des Materials der absorbierenden Schicht mit einer Dicke von 100 nm zumindest 5 %, insbesondere zumindest 10 %, vorteilhaft zumindest 15 %, vorzugsweise 20 % des einfallenden, vorzugsweise sichtbaren, Lichts. Die absorbierende Schicht ist zumindest großteils, vorzugsweise komplett aus Nitriden und/oder Oxinitriden von Molybdän, Nickel, Chrom, Niob, Vanadium, Titan, Tantal und/oder Wolfram, insbesondere Legierungen dieser, gebildet. Zumindest eine der Schichten der Beschichtung unterscheidet sich von einer absorbierenden Schicht. Insbesondere weist die Beschichtung maximal zwölf, vorteilhaft maximal zehn, vorzugsweise maximal acht, Schichten auf, die sich von einer absorbierenden Schicht unterscheiden. Eine derartige Schicht ist zumindest großteils, vorzugsweise komplett aus Zinnoxid (SnOₓ), Zinkoxid (ZnOₓ), Titanoxid (TiOₓ), Aluminiumoxid (AIOₓ), Siliziumoxid (SiOₓ), Nioboxid (NbOₓ), Tantaloxid (TaOₓ), Siliziumnitrid (SiNₓ) und/oder Aluminiumnitrid (AINₓ), insbesondere einer Mischung dieser, gebildet. Insbesondere sind Grenzflächen zwischen unterschiedlichen Schichten der Vielschichtstruktur dazu vorgesehen, Licht zu reflektieren. Es kann insbesondere eine Tiefenwahrnehmung eines Bedieners verbessert werden, so dass ein hoher Komfort erreichbar ist. Insbesondere kann vermieden werden, dass große Mengen von Licht in die Hausgerätevorrichtung durch die Glaseinheit ein- und/oder austreten. Insbesondere kann durch Wahl geeigneter Materialien, die in bestimmten Spektralbereichen stärker absorbieren als in anderen, eine Farbgebung der Vielschichtstruktur erreicht werden. Vorteilhaft unterscheidet sich eine abschließende Schicht der Beschichtung von einer absorbierenden Schicht. Unter einer "abschließenden" Schicht der Beschichtung soll insbesondere eine Schicht der Vielschichtstruktur verstanden werden, die am weitesten von allen Schichten der Vielschichtstruktur von der Glaseinheit entfernt ist. Da absorbierende Schichten von zumindest teilweise reaktiven Materialien gebildet sind, kann durch eine nicht absorbierende Schicht, die aus zumindest einem stabilen Material gebildet ist, ein hoher chemischer Schutz, insbesondere gegen Oxidation, und somit eine hohe Haltbarkeit der Beschichtung erreicht werden.

Die Hausgerätevorrichtung weist zumindest einen berührungsempfindlichen Sensor auf, der in dem Teilbereich angeordnet ist. Unter einem "berührungsempfindlichen" Sensor soll ein Sensor verstanden werden, dessen Sensorkenngröße, und zwar eine Kapazität, ein Widerstand und/oder eine Spannung, sich in Abhängigkeit von einem Berührungszustand, insbesondere einem Annäherungszustand, vorteilhaft einem Abstand eines Objekts, insbesondere zumindest einem Finger und/oder einem anderen Körperteil eines Bedieners, ändert. Insbesondere ist die Beschichtung zwischen dem berührungsempfindlichen Sensor und der Glaseinheit angeordnet. Insbesondere ist ein Bereich, der von dem Sensor erfasst wird, durchgängig von der Beschichtung bedeckt. In einer derartigen Ausgestaltung kann besonders von einem geringen Anteil an leitendem Material in der Beschichtung profitiert werden, welches eine Messung stören kann.

Weiterhin wird vorgeschlagen, dass die Hausgerätevorrichtung zumindest eine Schutzbeschichtung aufweist, die die Beschichtung zumindest großteils, insbesondere komplett überdeckt. Insbesondere weist die Schutzbeschichtung eine Dicke zwischen, 2 µm und 1000 µm, insbesondere zwischen 3 µm und 700 µm, vorteilhaft zwischen 4 µm und 500 µm, vorzugsweise zwischen 5 µm und 300 µm auf. Insbesondere ist die Schutzbeschichtung von einem Lack, insbesondere Acryllack, einer Keramik, und/oder einem Harz gebildet. Insbesondere ist die Schutzbeschichtung in einem Siebdruckverfahren, einem Sprühverfahren und/oder einem anderen geeigneten Verfahren aufgebracht. Es kann insbesondere ein mechanischer Schutz und somit eine hohe Haltbarkeit der Beschichtung ermöglicht werden.

Die Beschichtung ist dazu vorgesehen, einen metallischen Anschein zu erzeugen.

Darunter, dass die Beschichtung einen "metallischen Anschein erzeugt", soll insbesondere verstanden werden, dass die Beschichtung so wirkt, als wäre sie von einem Metall gebildet. Die Beschichtung weist eine metallisch wirkende Färbung auf. Unter einer "metallisch wirkenden Färbung" soll insbesondere eine Färbung verstanden werden, die eine Reflektivität zwischen 15 % und 80 %, insbesondere zwischen 20 % und 70 %, vorzugsweise zwischen 25 % und 60 %, aufweist. Insbesondere weist die Beschichtung eine Transmissivität größer als 0,1 %, insbesondere größer als 0,2 %, vorteilhaft größer als 0,3 %, vorzugsweise größer als 0,5 % und kleiner als 20 %, insbesondere kleiner als 15 %, vorzugsweise 10 % auf, um insbesondere optische Anzeigeelemente, insbesondere eine LED oder einen Bildschirm, durch die Beschichtung hindurch sichtbar zu machen. Insbesondere kann eine "metallisch schwarze" Färbung erzielt werden, wobei eine Reflektivität im sichtbaren Frequenzbereich kleiner ist als 15 %, insbesondere kleiner ist als 10 %. Insbesondere kann eine "edelstahlfarbene" Färbung erzielt werden, wobei eine Reflektivität im sichtbaren Frequenzbereich zwischen 20 % und 60 % liegt und Farbkoordinaten im L*a*b*-Farbraum für a* und b* Werte aufweisen, die betragsmäßig kleiner sind als 10. Insbesondere kann eine "farbig metallische" Färbung erzielt werden, die Farbkoordinaten im L*a*b*-Farbraum für a* und b* Werte aufweist, die betragsmäßig größer sind als 10. Es kann insbesondere eine Komfortsteigerung erreicht werden. Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäßes Kochfeld in einer schematischen Ansicht von oben,
- Fig. 2: einen Schnitt entlang der Linie II-II in Figur 1 in einer schematischen Darstellung,
- Fig. 3: ein Transmissivitäts-/Reflektivitätsspektrum eines ersten Ausführungsbeispiels,
- Fig. 4: ein Transmissivitäts-/Reflektivitätsspektrum eines zweiten Ausführungsbeispiels,
- Fig. 5: ein Transmissivitäts-/Reflektivitätsspektrum eines dritten Ausführungsbeispiels und
- Fig. 6: ein Transmissivitäts-/Reflektivitätsspektrum eines vierten Ausführungsbeispiels.

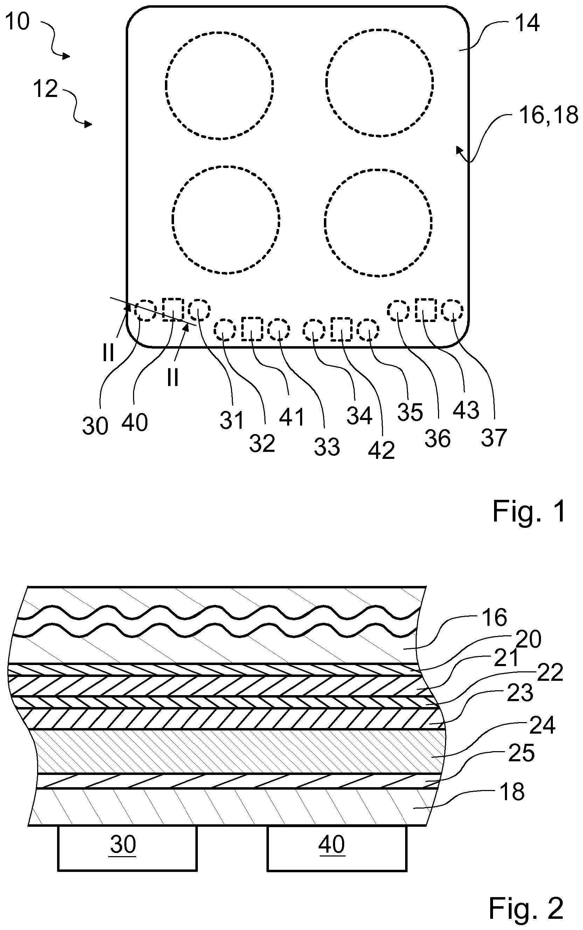

Figur 1 zeigt ein als Kochfeld ausgebildetes Hausgerät 10 mit einer als Kochfeldvorrichtung ausgebildeten Hausgerätevorrichtung 12. Die Hausgerätevorrichtung 12 ist als Induktionsheizvorrichtung ausgebildet. Die Hausgerätevorrichtung 12 weist eine als Kochfeldplatte ausgebildete Glaseinheit 14 auf. Auf der Glaseinheit 14 sind vier, als Kochzonen ausgebildete Heizzonen markiert. Die Hausgerätevorrichtung 12 weist weiterhin vier Induktoren auf, die auf einer, einem Bediener abgewandten Seite der Glaseinheit 14 angeordnet sind. Die Induktoren sind unter den Kochzonen angeordnet. Weiterhin weist die Hausgerätevorrichtung 12 eine als Vielschichtstruktur ausgebildete Beschichtung 16 auf, die auf einer kompletten Rückseite der Glaseinheit 14 angeordnet ist. Weiterhin weist die Beschichtung 16 sechs aufeinanderfolgende Schichten 20, 21, 22, 23, 24, 25 aus isolierenden Materialien auf (Figur 2). Alle Schichten 20, 21, 22, 23, 24, 25 der Beschichtung 16 sind aus isolierenden Materialien gebildet. Weiterhin weist die Hausgerätevorrichtung 12 acht berührungsempfindliche Sensoren 30, 31, 32, 33, 34, 35, 36, 37 auf, die an der Rückseite der Glaseinheit 14 angeordnet sind. Die berührungsempfindlichen Sensoren 30, 31, 32, 33, 34, 35, 36, 37 sind dazu vorgesehen, Heizleistungen der Induktoren einzustellen. Weiterhin weist die Hausgerätevorrichtung 12 vier als Segmentanzeigen ausgebildete Anzeigeeinheiten 40, 41, 42, 43 auf. Die Anzeigeeinheiten 40, 41, 42, 43 sind auf einer Rückseite der Glaseinheit 14 angeordnet. Die Anzeigeeinheiten 40, 41, 42, 43 sind jeweils zwischen zwei berührungsempfindlichen Sensoren 30, 31, bzw. 32, 33 bzw. 34, 35, bzw. 36, 37 angeordnet. Die Anzeigeeinheiten 40, 41, 42, 43 sind jeweils dazu vorgesehen, den Heizzonen zugeordnete Heizleistungen in Form von Leistungsstufen darzustellen. Die Beschichtung 16 erstreckt sich hierbei sowohl über einen Bereich, in dem die Heizzonen angeordnet sind, als auch einen Bedienerschnittstellenbereich, in dem die Anzeigeeinheiten 40, 41, 42, 43 und die berührungsempfindlichen Sensoren 30, 31, 32, 33, 34, 35, 36, 37 angeordnet sind.

Figur 2 zeigt einen Schnitt durch die Glaseinheit 14, wobei ein berührungsempfindlicher Sensor 30 und eine Anzeigeeinheit 40 geschnitten sind. An die aus transparenter Glaskeramik gebildete Glaseinheit 14 schließt sich eine erste, sich von einer absorbierenden Schicht unterscheidende Schicht 20 aus Titanoxid (TiOₓ) mit einer Dicke von 34 nm an. Es folgt eine, von einer absorbierenden Schicht abweichende Schicht 21 aus Silizium-Aluminium-Oxid (SiAIOₓ) mit einer Dicke von 70 nm. Als drittes folgt eine, sich von einer absorbierenden Schicht unterscheidende Schicht 22 aus 34 nm Titanoxid, auf die wiederum eine, von einer absorbierenden Schicht abweichende Schicht 23 aus 70 nm Silizium-Aluminium-Oxid. Es folgt eine fünfte, absorbierende Schicht 24, die aus 250 nm nitroxiertem Edelstahl (SSt-NₓO_{y}) gebildet ist. Eine sechste, abschließende Schicht 25 der Beschichtung 16, die sich von einer absorbierenden Schicht unterscheidet, ist aus 50 nm Silizium-Aluminium-Nitrid (SiAINx) gebildet. Eine der Schichten 20, 21, 22, 23, 24, 25 der Beschichtung 16 ist als absorbierende Schicht ausgebildet. Die Schichten 20, 21, 22, 23, 24, 25 der Beschichtung 16 sind durch Magnetron-Sputtern, ein PVD-Verfahren, aufgebracht. Die als Vielschichtstruktur ausgebildete Beschichtung 16 ist von einer Schutzbeschichtung 18, die von einem transparenten Acryllack gebildet ist, überdeckt. Die Schutzbeschichtung 18 weist eine Dicke von 200 µm auf.

Der berührungsempfindliche Sensor 30 ist direkt an der Schutzbeschichtung 18 angeordnet. Die Schutzbeschichtung 18 verhindert bei einer Montage des berührungsempfindlichen Sensors 30 eine Beschädigung, wie beispielsweise ein Verkratzen, der Beschichtung 16. Der berührungsempfindliche Sensor 30 ist an die Schutzbeschichtung 18 angeklebt. Der berührungsempfindliche Sensor 30 ist als kapazitiver Sensor ausgebildet, der bei Annäherung beispielsweise eines Fingers eines Bedieners seine Kapazität verändert. Eine Messung findet dabei durch die Glaseinheit 14 hindurch statt. Da die Schichten 20, 21, 22, 23, 24, 25 aus isolierenden Materialien gebildet sind, kann die Beschichtung 16 über dem berührungsempfindlichen Sensor 30 durchgehend ausgebildet sein. Die Anzeigeeinheit 40 weist von LEDs gebildete Segmente auf. Für die berührungsempfindlichen Sensoren 31, 32, 33, 34, 35, 36, 37 und die Anzeigeeinheiten 41, 42, 43 gilt hierbei gleiches wie für den berührungsempfindlichen Sensor 30 und die Anzeigeeinheit 40.

Weiterhin sind Anordnungen denkbar, in denen auf die Schutzbeschichtung 18 verzichtet ist und/oder in denen der berührungsempfindliche Sensor 30 direkt auf die Beschichtung 16 aufgebracht ist und/oder in denen der berührungsempfindliche Sensor 30 zwischen der Beschichtung 16 und der Schutzbeschichtung 18 angeordnet ist.

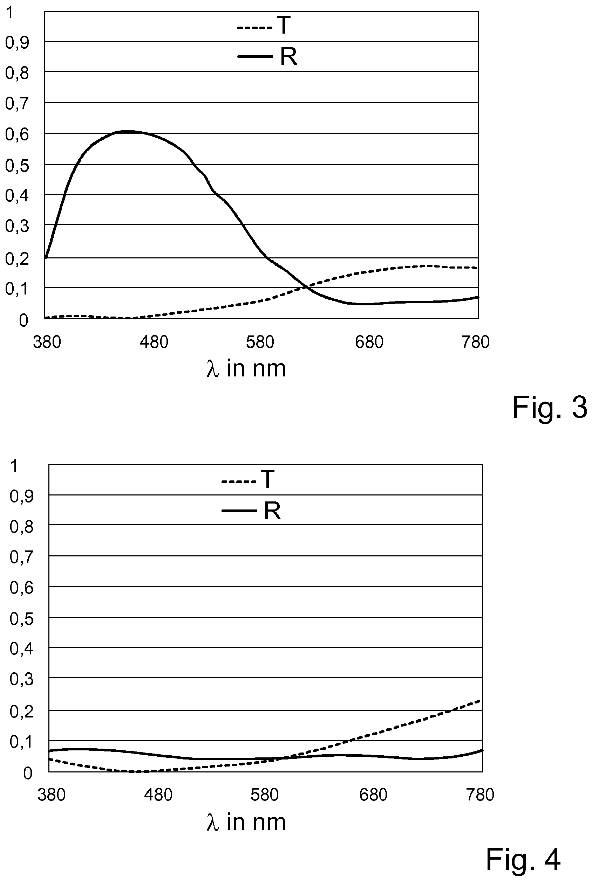

In Figur 3 ist ein Transmissivitäts-/Reflektivitätsspektrum für die beschriebene Beschichtung 16 dargestellt. Es sind eine Transmissivität T und eine Reflektivität R in Abhängigkeit von einer Wellenlänge λ dargestellt. Die Beschichtung 16 ist dazu vorgesehen, einen metallischen Anschein zu erzeugen. Die Beschichtung 16 weist für den Spektralbereich zwischen 380 nm und 580 nm eine hohe Reflektivität, zwischen 20 % und 60 %, auf und absorbiert im übrigen Spektralbereich stark. Es resultiert eine metallische, kräftig blau-grünliche Färbung der Beschichtung 16. Im L*a*b*-Farbraum liegt eine Farbe der Beschichtung 16 bei L* = 66, a* = -24, b* = -26. Eine Transmissivität der Beschichtung 16 liegt im Spektralbereich zwischen 620 nm und 780 nm zwischen 10 % und 20 %, weswegen Licht von roten LEDs der Anzeigeeinheit 40 durch die Beschichtung 16 und die Schutzbeschichtung 18 hindurch sichtbar ist.

Weiterhin sind Ausgestaltungen denkbar, in denen auf die Rückseite oder eine Vorderseite der Glaseinheit 14 durch Laserbearbeitung und/oder Siebdruck erstellte Markierungen und/oder Zierelemente aufgebracht sind oder in denen durch Laserbearbeitung in der Glaseinheit 14 Markierungen eingebrannt sind.

In den Figuren 4 bis 6 sind Transmissivitäts-/Reflektivitätsspektren weiterer erfindungsgemäßer Ausgestaltungen dargestellt. Es sind jeweils die Transmissivität T und die Reflektivität R in Abhängigkeit von der Wellenlänge λ dargestellt. Es wird von einer gleichartigen Ausgestaltung der Hausgerätevorrichtung 12 wie in den Figuren 1 und 2 ausgegangen. Lediglich die Parameter der Beschichtung 16 unterscheiden sich.

In Figur 4 ist ein Transmissivitäts-/Reflektivitätsspektrum eines weiteren Ausführungsbeispiels dargestellt. Die Beschichtung ist von drei aufeinanderfolgenden Schichten aus isolierenden Materialien gebildet. Eine an die Glaseinheit anschließende erste Schicht unterscheidet sich von einer absorbierenden Schicht und ist aus 62 nm Silizium-Aluminium-Nitrid gebildet. Eine folgende zweite Schicht, die als absorbierende Schicht ausgebildet ist, ist aus 325 nm nitroxiertem Edelstahl gebildet. Eine abschließende, dritte Schicht, die sich von einer absorbierenden Schicht unterscheidet, ist aus 50 nm Silizium-Aluminium-Nitrid gebildet. Die Beschichtung ist dazu vorgesehen, einen metallischen Anschein zu erzeugen. Die Beschichtung weist für den Spektralbereich zwischen 380 nm und 780 nm eine Reflektivität zwischen 5 % und 10 % auf, absorbiert also im gesamten Spektralbereich sichtbaren Lichts stark. Es resultiert eine dunkle, beinahe schwarze, metallische, bläuliche Färbung der Beschichtung. Im roten Spektralbereich zeigt sich eine erhöhte Transmissivität, was sich durch rote LEDs in einer Anzeigeeinheit ausnutzen lässt.

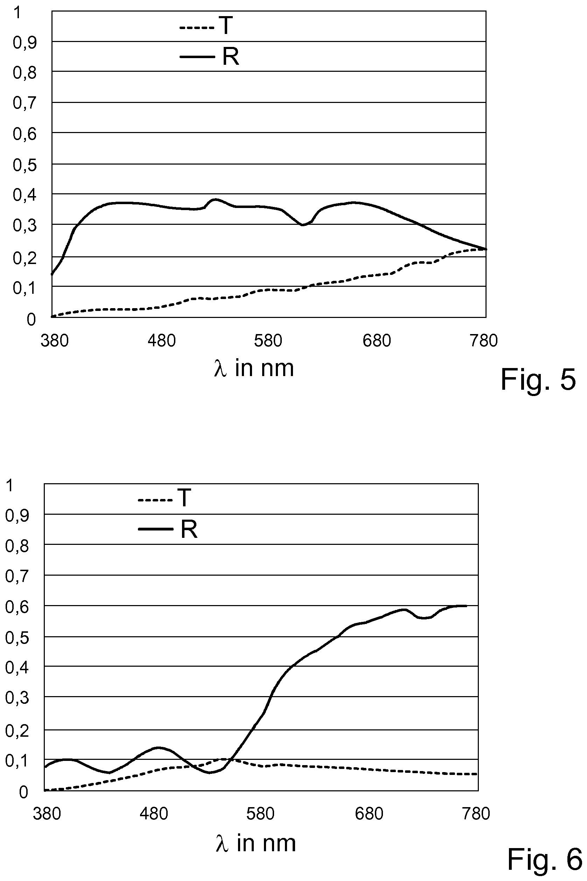

In Figur 5 ist ein Transmissivitäts-/Reflektivitätsspektrum eines weiteren Ausführungsbeispiels dargestellt. Die Beschichtung ist von fünf aufeinanderfolgenden Schichten aus isolierenden Materialien gebildet. Eine an die Glaseinheit anschließende erste Schicht unterscheidet sich, wie auch eine zweite und dritte Schicht, von einer absorbierenden Schicht und ist aus 42 nm Titanoxid gebildet. Die zweite Schicht ist aus 96 nm Silizium-Aluminium-Oxid gebildet. Die dritte Schicht ist aus 30 nm Titanoxid gebildet. Eine folgende vierte Schicht, die als absorbierende Schicht ausgebildet ist, ist aus 225 nm nitroxiertem Edelstahl gebildet. Eine abschließende fünfte Schicht, die sich von einer absorbierenden Schicht unterscheidet, ist aus 50 nm Silizium-Aluminium-Nitrid gebildet. Die Beschichtung ist dazu vorgesehen, einen metallischen Anschein zu erzeugen. Die Beschichtung weist für den Spektralbereich zwischen 380 nm und 780 nm eine Reflektivität zwischen 20 % und 40 % auf. Es resultiert eine edelstahlfarbene, leicht bläulich-grünliche Beschichtung. Im roten Spektralbereich zeigt sich eine erhöhte Transmissivität, was sich durch rote LEDs in einer Anzeigeeinheit ausnutzen lässt. Im L*a*b*-Farbraum liegt eine Farbe der Beschichtung bei L* = 66, a* = -1,5, b* = -0,5.

In Figur 6 ist ein Transmissivitäts-/Reflektivitätsspektrum eines weiteren Ausführungsbeispiels dargestellt. Die Beschichtung ist von sechs aufeinanderfolgenden Schichten aus isolierenden Materialien gebildet. Eine an die Glaseinheit anschließende erste Schicht unterscheidet sich, wie auch eine zweite, dritte und vierte Schicht, von einer absorbierenden Schicht und ist aus 75 nm Titanoxid gebildet. Die zweite Schicht ist aus 125 nm Silizium-Aluminium-Oxid gebildet. Die dritte Schicht ist aus 75 nm Titanoxid gebildet. Die vierte Schicht ist aus 125 nm Silizium-Aluminium-Oxid gebildet. Eine folgende fünfte Schicht, die als absorbierende Schicht ausgebildet ist, ist aus 190 nm nitroxiertem Edelstahl gebildet. Eine abschließende sechste Schicht, die sich von einer absorbierenden Schicht unterscheidet, ist aus 50 nm Silizium-Aluminium-Nitrid gebildet. Die Beschichtung ist dazu vorgesehen, einen metallischen Anschein zu erzeugen. Die Beschichtung weist für den Spektralbereich zwischen 630 nm und 780 nm eine Reflektivität zwischen 40 % und 60 % auf. Es resultiert eine metallische, kräftig rote Färbung der Beschichtung. Im grünen Spektralbereich, bei 550 nm, zeigt sich ein Maximum der Transmissivität, was sich durch grüne LEDs in einer Anzeigeeinheit ausnutzen lässt. Im L*a*b*-Farbraum liegt eine Farbe der Beschichtung bei L* = 47, a* = 33, b* = 23.

**Bezugszeichen**

| | | | |
|---|---|---|---|
| 10 | Hausgerät | 40 | Anzeigeeinheit |
| 12 | Hausgerätevorrichtung | 41 | Anzeigeeinheit |
| 14 | Glaseinheit | 42 | Anzeigeeinheit |
| 16 | Beschichtung | 43 | Anzeigeeinheit |
| 18 | Schutzbeschichtung | | |
| 20 | Schicht | | |
| 21 | Schicht | | |
| 22 | Schicht | | |
| 23 | Schicht | | |
| 24 | Schicht | | |
| 25 | Schicht | | |
| 30 | berührungsempfindlicher Sensor | | |
| 31 | berührungsempfindlicher Sensor | | |
| 32 | berührungsempfindlicher Sensor | | |
| 33 | berührungsempfindlicher Sensor | | |
| 34 | berührungsempfindlicher Sensor | | |
| 35 | berührungsempfindlicher Sensor | | |
| 36 | berührungsempfindlicher Sensor | | |
| 37 | berührungsempfindlicher Sensor | | |

## Patentansprüche

1. Hausgerät (10) mit einer Hausgerätevorrichtung (12), insbesondere einer Kochfeldvorrichtung, welche zumindest eine Glaseinheit (14) und zumindest eine als Vielschichtstruktur ausgebildete Beschichtung (16), die in zumindest einem Teilbereich auf zumindest einer Seite der Glaseinheit (14) angeordnet ist, wobei die Beschichtung (16) zumindest zwei aufeinanderfolgende Schichten (20, 21, 22, 23, 24, 25) aus zumindest einem isolierenden Material, welches ein dielektrisches Material ist, aufweist, und zumindest einen berührungsempfindlichen Sensor (30, 31, 32, 33, 34, 35, 36, 37), der als kapazitiver Sensor ausgebildet und in dem Teilbereich angeordnet ist, aufweist, wobei zumindest eine erste der Schichten (20, 21, 22, 23, 24, 25) der Beschichtung (16) als absorbierende Schicht ausgebildet ist, deren Material für Licht in zumindest einem Wellenlängenbereich, welcher zumindest dem Wellenlängenbereich des sichtbaren Lichts zwischen 380 nm und 780 nm entspricht, einen Absorptionskoeffizienten aufweist, der größer als 1/µm ist, wobei die absorbierende Schicht zumindest großteils aus Nitriden und/oder Oxinitriden von Molybdän, Nickel, Chrom, Niob, Vanadium, Titan, Tantal und/oder Wolfram gebildet ist, wobei zumindest eine zweite der Schichten (20, 21, 22, 23, 24, 25) der Beschichtung (16) sich von einer absorbierenden Schicht unterscheidet, wobei die zweite Schicht zumindest großteils aus Zinnoxid (SnOx), Zinkoxid (ZnOx), Titanoxid (TiOx), Aluminiumoxid (AIOₓ), Siliziumoxid (SiOx), Nioboxid (NbOx), Tantaloxid (TaOx), Siliziumnitrid (SiNx) und/oder Aluminiumnitrid (AINx) gebildet ist, und wobei die Beschichtung (16) dazu vorgesehen ist, einen metallischen Anschein zu erzeugen und eine metallisch wirkende Färbung aufweist.

2. Hausgerät (10) nach Anspruch 1, **dadurch gekennzeichnet, dass** alle Schichten (20, 21, 22, 23, 24, 25) der Beschichtung (16) aus zumindest einem isolierenden Material, welches ein dielektrisches Material ist, gebildet sind.

3. Hausgerät (10) nach einem der vorhergehenden Ansprüche, **dadurch gekennzeichnet, dass** zumindest ein Teil der Beschichtung (16) mit einem PVD-Verfahren aufgebracht ist.

4. Hausgerät (10) nach einem der vorhergehenden Ansprüche, **dadurch gekennzeichnet, dass** sich eine abschließende Schicht (25) der Beschichtung (16) von einer absorbierenden Schicht unterscheidet, wobei das Material der absorbierenden Schicht für Licht in zumindest einem Wellenlängenbereich, welcher zumindest dem Wellenlängenbereich des sichtbaren Lichts zwischen 380 nm und 780 nm entspricht, einen Absorptionskoeffizienten aufweist, der größer als 1/µm ist.

5. Hausgerät (10) nach einem der vorhergehenden Ansprüche, **dadurch gekennzeichnet, dass** die Hausgerätevorrichtung (12) eine Schutzbeschichtung (18) aufweist, die die Beschichtung (16) zumindest großteils überdeckt.

## Claims

1. Household appliance (10) with a household appliance device (12), in particular a hob device, which has at least one glass unit (14) and at least one coating (16) embodied as a multilayer structure, said coating being arranged in at least one subregion on at least one side of the glass unit (14), wherein the coating (16) has at least two consecutive layers (20, 21, 22, 23, 24, 25) made from at least one insulating material, which is a dielectric material, and has at least one touch-sensitive sensor (30, 31, 32, 33, 34, 35, 36, 37), which is embodied as a capacitive sensor and is arranged in the subregion, wherein at least a first one of the layers (20, 21, 22, 23, 24, 25) of the coating (16) is embodied as an absorbing layer, the material of which has an absorption coefficient greater than 1/µm for light in at least one wavelength range, which corresponds at least to the wavelength range of visible light between 380 nm and 780 nm, wherein the absorbing layer is formed at least largely from nitrides and/or oxynitrides of molybdenum, nickel, chrome, niobium, vanadium, titanium, tantalum and/or tungsten, wherein at least a second one of the layers (20, 21, 22, 23, 24, 25) of the coating (16) differs from an absorbing layer, wherein the second layer is formed at least largely from tin oxide (SnOx), zinc oxide (ZnOx), titanium oxide (TiOx), aluminium oxide (AlOx), silicon oxide (SiOx), niobium oxide (NbOx), tantalum oxide (TaOx), silicon nitride (SiNx) and/or aluminium nitride (AINx), and wherein the coating (16) is provided to create a metallic appearance and has a metallic-looking colour.

2. Household appliance (10) according to claim 1, **characterised in that** all layers (20, 21, 22, 23, 24, 25) of the coating (16) are formed from at least one insulating material, which is a dielectric material.

3. Household appliance (10) according to one of the preceding claims, **characterised in that** at least one part of the coating (16) is applied with a PVD method.

4. Household appliance (10) according to one of the preceding claims, **characterised in that** a final layer (25) of the coating (16) differs from an absorbing layer, wherein the material of the absorbing layer has an absorption coefficient greater than 1/µm for light in at least one wavelength range, which corresponds at least to the wavelength range of visible light between 380 nm and 780 nm.

5. Household appliance (10) according to one of the preceding claims, **characterised in that** the household appliance device (12) has a protective coating (18) which at least largely covers the coating (16).

## Revendications

1. Appareil électroménager (10) qui comprend un dispositif (12) faisant office d'appareil ménager, en particulier une plaque de cuisson, qui présente au moins une unité en verre (14) et au moins un revêtement (16) réalisé sous la forme d'une structure multicouche, qui est disposé dans au moins une zone partielle sur au moins un côté de l'unité en verre (14), dans lequel le revêtement (16) présente au moins deux couches successives (20, 21, 22, 23, 24, 25) qui sont constituées par au moins un matériau isolant qui est un matériau diélectrique, et au moins un capteur sensible au toucher (30, 31, 32, 33, 34, 35, 36, 37) qui est réalisé sous la forme d'un capteur capacitif et qui est disposé dans la zone partielle ; dans lequel au moins une première couche parmi les couches (20, 21, 22, 23, 24, 25) du revêtement (16) est réalisée sous la forme d'une couche absorbante dont la matière présente un coefficient d'absorption pour la lumière qui est supérieur à 1/µm, dans au moins une gamme de longueurs d'ondes qui correspond au moins à la gamme de longueurs d'ondes de la lumière visible entre 380 nm et 780 nm ; dans lequel la couche absorbante est réalisée au moins en grande partie à partir de nitrures et/ou d'oxynitrures de molybdène, de nickel, de chrome, de niobium, de vanadium, de titane, de tantale et/ou de tungstène ; dans lequel au moins une deuxième couche parmi les couches (20, 21, 22, 23, 24, 25) du revêtement (16) se distingue d'une couche absorbante ; dans lequel la deuxième couche est réalisée au moins en grande partie à partir d'oxyde d'étain (SnOx), d'oxyde de zinc (ZnOx), d'oxyde de titane (TiOx), d'oxyde d'aluminium (AIOₓ), d'oxyde de silicium (SiOx), d'oxyde de niobium (NbOx), d'oxyde de tantale (TaOx), de nitrure de silicium (SiNx) et/ou de nitrure d'aluminium (AINx) ; et dans lequel le revêtement (16) est prévu pour générer un aspect métallique et présente une coloration ayant un effet métallique.

2. Appareil électroménager (10) selon la revendication 1, **caractérisé en ce que** toutes les couches (20, 21, 22, 23, 24, 25) du revêtement (16) sont réalisés à partir d'au moins un matériau isolant, qui est un matériau diélectrique.

3. Appareil électroménager (10) selon l'une quelconque des revendications précédentes, **caractérisé en ce qu'**au moins une partie du revêtement (16) est appliquée à l'aide d'un procédé de dépôt physique en phase vapeur.

4. Appareil électroménager (10) selon l'une quelconque des revendications précédentes, **caractérisé en ce qu'**une couche finale (25) du revêtement (16) se distingue d'une couche absorbante ; dans lequel la matière de la couche absorbante présente un coefficient d'absorption pour la lumière qui est supérieur à 1/µm, dans au moins une gamme de longueurs d'ondes qui correspond au moins à la gamme de longueurs d'ondes de la lumière visible entre 380 nm et 780 nm.

5. Appareil électroménager (10) selon l'une quelconque des revendications précédentes, **caractérisé en ce que** le dispositif (12) faisant office d'appareil électroménager présente un revêtement de protection (18) qui recouvre au moins en grande partie le revêtement (16).
